# EUROPEAN PATENT APPLICATION

(11) **EP 1 961 544 A2**
(43) Date of publication of application: **27.08.2008**
(21) Application number: 08380051.6
(22) Date of filing: 21.02.2008
(51) Int. Cl.: B29C 37/00, B30B 15/32, B29C 43/50, B29C 45/42

(54) **System for automatically removing parts in presses and the like**

(30) Priority: 21.02.2007 ES 200700452
(71) Applicant: Marrodan y Rezola, S.A., 26001 Logroño - La Rioja (ES)
(72) Inventor: Espiga Montiel, Alejandro, 26001 Logroño - La Rioja (ES)
(74) Representative: Carvajal y Urquijo, Isabel

(57) **Abstract**

The invention relates to the system comprising a structure (1) which can be fixed to a machine (3) for vulcanizing parts in cavities (6) provided in a multiple mold (4-5) sliding on a guide (8), the structure (1) having a carriage (15) for driving the multiple mold (4-5) from the machine (3) for vulcanizing the parts to the actual structure (1) in which the vulcanized parts are automatically removed or demolded by means of separating the parts (4) and (5) forming the mold, elements (12) collaborating which in a vertical arrangement are connected to the vulcanized parts for maintaining them in their position when separating the parts (4) and (5) of the mold. The carriage (15) can be moved in parallel towards the multiple mold (4-5), on a guide (17), and by means of actuating a rack and pinion system (18-19). The system allows automatically removing rubber parts after the vulcanization in compression presses and similar machines.

## Description

### Object of the Invention

The present invention relates to a system for automatically removing parts in presses and the like which is specifically provided for demolding rubber parts after they are vulcanized in compression presses, which can also be applied in injection presses, achieving in both cases improving the performance to a great extent, as well as allowing to obtain a larger number of parts per cycle and being adapted to the corresponding size of the mold.

### Background of the Invention

As is known, rubber parts can be vulcanized in three different ways, one by injection, another by transfer and another by compression.

Specifically in the systems by transfer, the pressure of a press is used for passing rubber through holes (similar to injection nozzles) to the shaping cavity from a compressed tank.

Vulcanizing parts by compression is also based on a press adjusting the rubber to the corresponding cavity by compression, the rubber already being previously located in the cavity in this case.

Specifically, in systems for obtaining vulcanized parts by compression, the parts are manually demolded or removed with the aid of metal levers by the operator, which involves losing time, inconvenience when demolding, etc.

In addition, the known systems for vulcanizing rubber parts require concrete and specific means in each type of system in order to carry out the operation of demolding or removing the obtained parts.

### Description of the Invention

The proposed system has been designed in order to solve the drawbacks previously set forth based on a simple but efficient solution, which can be used in all the machines intended to manufacture parts in cavities, as is the case of injecting plastics, polyurethanes, polyethylenes, etc, and more specifically in those which vulcanize rubber parts by compression, of course without ruling out those which carry out the process by transfer.

More specifically, the system of the invention is provided to allow automatically removing or demolding parts in presses and the like, being based on a structure suitably fixed to the corresponding machine or press in question, threaded elements, welding being able to be used as attachment means, or the actual structure being included in the machine itself.

In any case this structure fixed to the machine or press incorporates a frame which is detachable in a vertical direction, assembled in a sliding manner on columns of the general prismatic configuration, determining the previously mentioned structure, a plurality of elements being assembled on this movable frame, which elements are provided to prevent the parts from adhering in the demolding phase.

A carriage responsible for removing the mold from the press or machine in which the parts are obtained is also assembled in the structure, such carriage being assembled on lateral guides through corresponding sliding wheels and being able to be actuated by means of a rack and pinion system in association with a pneumatic guide maintaining the parallelism between the front of the machine or press and the movement of the actual carriage towards this machine for the purpose of engaging the mold once the parts are already vulcanized and driving them out of the machine in order to automatically remove or demold them.

The parallelism of the carriage in its movement towards the machine or press can evidently be carried out by means of guides, cylinders, slide-bars, or any other suitable system, such that the progress or movement of such carriage can be carried out with hydraulic means, with electric motors, with pneumatic cylinders, with chains, etc.

Engagement means will logically be included both in the front of the carriage and in the corresponding part of the structure of the mold, which means can be automatically actuated both for the engagement and for the disengagement thereof.

The mold is multiple and is formed by a plurality of plates with notches which, in their horizontal opposition and confrontation, determine cavities in which the rubber parts are precisely molded such that when demolding or removing the parts, these parts of the mold must be separated in order to allow the obtained parts to fall by gravity, using suitable elements which will maintain the parts secured, and to allow separating the parts of the mold without the parts adhering to either of these separable parts, so that once the parts are suitably apart from one another, the parts fall by gravity.

The actuation for attaching or separating the different walls of the multiple mold to or from one another is carried out by means of a pneumatic or hydraulic cylinder.

Although the described system is provided to be preferably used in automatically removing or demolding vulcanized rubber parts in compression presses, it can also be applied in an injection press, although reducing the number of parts per cycle, but in any case improving the performance to a great extent upon allowing many more parts per cycle than by means of conventional systems, and being adapted to the size of the mold, involving an innovation and a convenience when demolding or removing the parts manufactured by compression with respect to traditional systems.

### Description of the Drawings

To complement the description being made and for the purpose of aiding to better understand the features of the invention according to a preferred practical embodiment thereof, a set of drawings is attached as an integral part of said description, in which the following has been shown with an illustrative and non-limiting character:

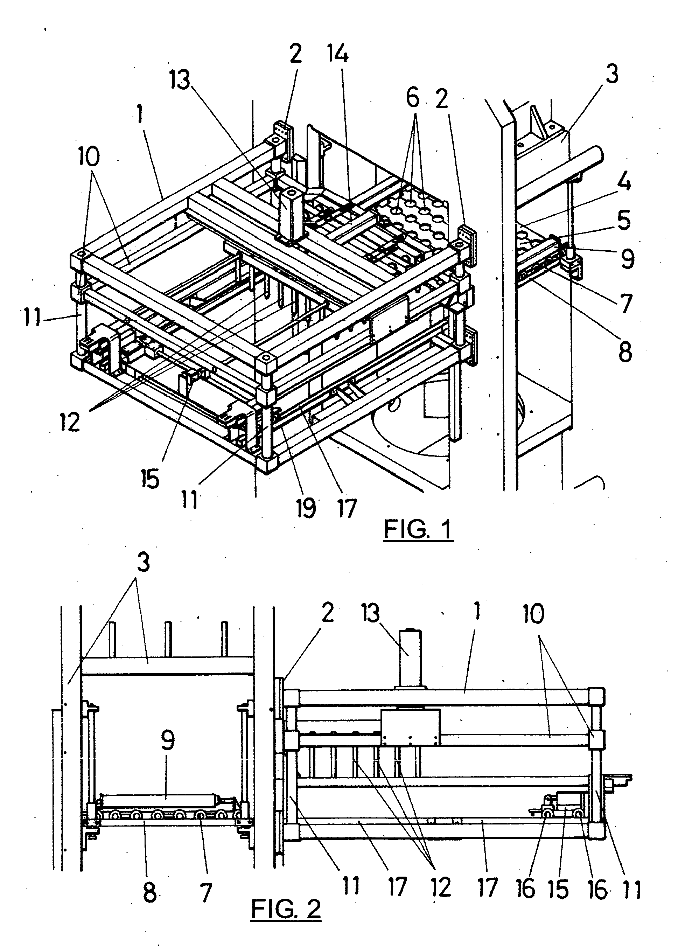

Figure 1 shows a depiction according to a general perspective view of the system of the invention in rest position, i.e. before initiating the cycle for demolding or removing the parts.
Figure 2 shows a side elevational view of the assembly depicted in the previous figure.

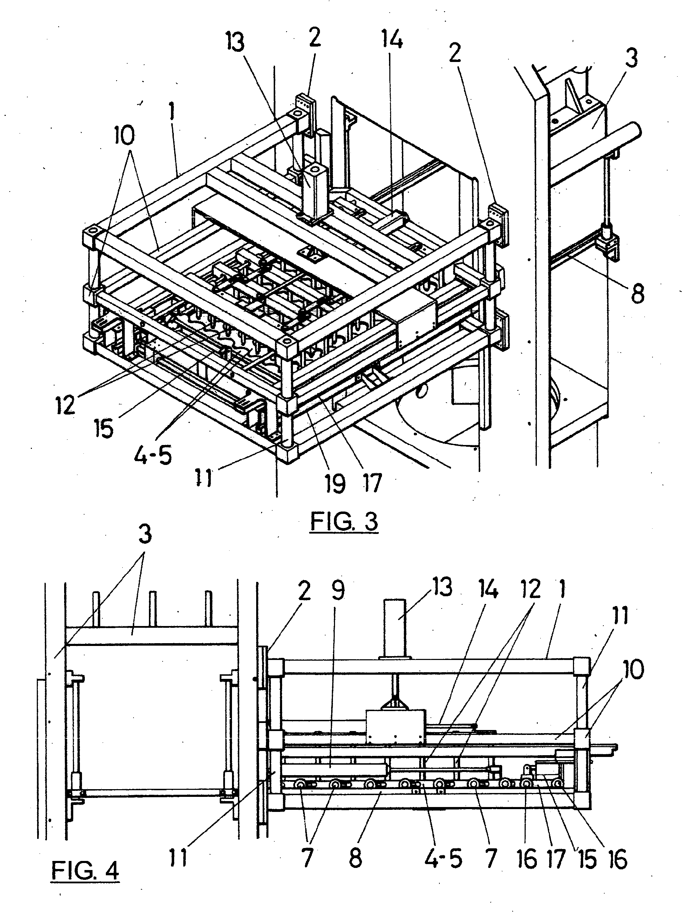

Figure 3 shows a view like that of Figure 1 but in the final removal or demolding position.
Figure 4 shows a side elevational view of the assembly depicted in the previous figure.

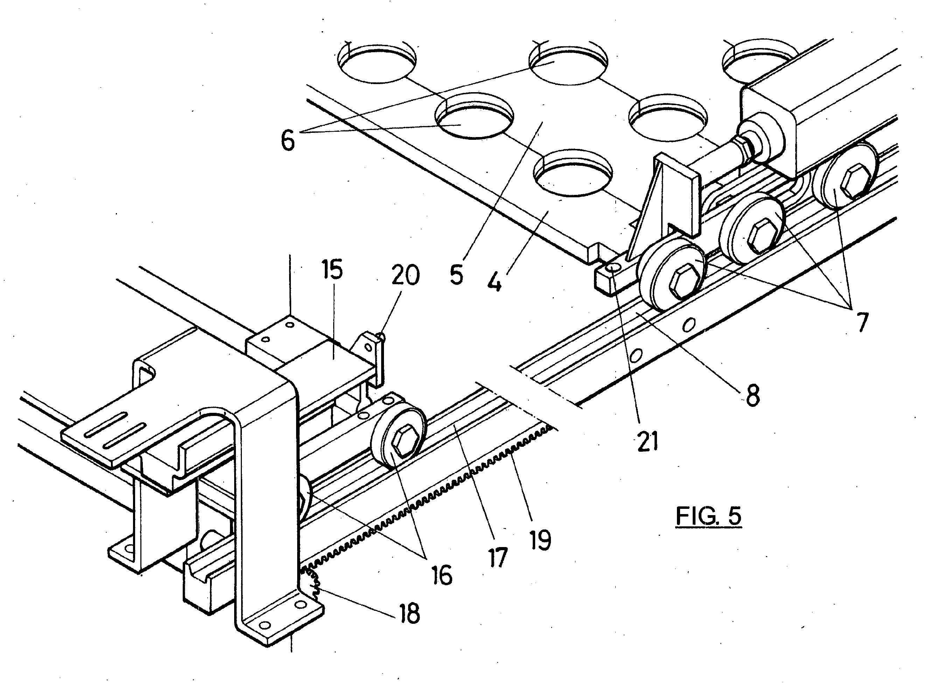

Figure 5 shows a perspective view corresponding to the detail of guiding the molds from the machine to the structure of the invention, as well of the carriage sliding on the corresponding guide.

### Preferred Embodiment of the Invention

As can be seen in the indicated figures, the system of the invention is formed from a structure (1) which, through suitable means (2), will be fixed to a machine or press (3) in which the parts are vulcanized, in corresponding molds determined by a plurality of parts (4) and (5) arranged alternatively to one another on a horizontal plane in order to form multiple cavities (6) in which the parts to be obtained are precisely vulcanized, whereby the mold can be considered as multiple, being supported on rolling elements (7) for rolling on guides (8) provided for this purpose. Associated to the multiple mold (4-5), a hydraulic or pneumatic cylinder (9) has been provided, the function of which is that of joining the parts (4) and (5) in order to form the cavities (6), or separating these parts (4) and (5) in order to release the vulcanized parts, i.e. in order to achieve the demolding thereof depending on the retraction or extendibility of this hydraulic or pneumatic cylinder (9).

On the general structure (1), there is assembled a frame (10) which can slide upwards and downwards through the columns (11) corresponding with the corners of the actual structure (1), which frame which will assemble a series of elements in order to secure the parts in the demolding.

In a preferred embodiment, the mentioned elements are formed by bolts (12), pins, bars or any similar element in a vertical arrangement and which can move upwards or downwards, even laterally, by means of respective hydraulic cylinders (13) and (14) for the purpose of carrying out the correct demolding operation as will be shown below.

The system further includes a carriage (15) which can be horizontally moved by means of wheels (16) on lateral guides (17) provided in the actual structure (1).

This carriage (15) is associated to a pneumatic guide or any other suitable system intended to maintain the parallelism against the front of the machine (3) in its movement by means of pinions (18) meshed in racks (19) located along the sliding guides (8) of the multiple mold (4-5).

According to these features, once the parts are vulcanized in the cavities (6) of the molds (4-5) provided in the machine (3), the carriage (15) is moved towards these molds (4-5), and with the previously mentioned parallelism, sliding over its guide (17) until opposing the multiple mold, at which time an engaging element (20) provided in the front of the carriage (15) automatically engages with a complementary element (21) provided in the frame or structure of the mold (4-5), such that the carriage, in its movement in the reverse direction, will drive the entire assembly of the multiple mold with it and will place it in correspondence with the structure (1), below the elements or bolts (12) which will be suitably moved by actuating the cylinders (13) and (14) for opposing the cavities (6), specifically the vulcanized parts, and being housed in said cavities so that after the actuation of the cylinder (16) and corresponding separation of the parts (4 and 5) of the multiple mold, the vulcanized parts are separated from the parts of the mold, without being adhered to either of them as a result of the bolts (12), which will allow the free fall by gravity of the vulcanized parts.

The described embodiment is evidently provided for removing parts provided with a central hole, although the system can be applied to parts with any shape by logically changing the elements or bolts (12) for other devices suitable for these different shapes of the parts.

## Claims

1. A system for automatically removing parts in presses and the like which, being provided for automatically removing or demolding rubber parts obtained in presses or similar machines, the vulcanized parts obtained by compression or by transfer, and even being applicable to injection machines, is **characterized in that** it is formed from a fixed structure (1) in the corresponding machine or press (3) in which a plurality of parts (4-5) are assembled, which parts determine multiple cavities (6) in which the parts to be obtained are vulcanized, the structure of the multiple mold forming the parts (4) and (5) being associated to a cylinder (9) the retraction or expansion of which entails the attachment or separation of the parts (4) and (5) of the mold in order to allow vulcanizing the parts or demolding or making them independent; it having been provided that in said fixed structure (1) there is assembled a frame (10) which is detachable in an upward and downward direction, carrying a plurality of elements (12), bolts, pins, bars or any similar element collaborating in removing or demolding the vulcanized parts, with the particularity of including a carriage (15) which can be moved in the structure (1) in order to approach and engage in the multiple mold formed by the parts (4-5) for its removal with respect to the machine (3) and arranging it in correspondence with the structure (1) for demolding the vulcanized parts.

2. A system for automatically removing parts in presses and the like according to claim 1, **characterized in that** the elements (12) provided in the detachable frame (10) are associated to respective vertical (13) and horizontal (14) cylinders for the upward and downward movement of the elements or bolts (12) and their connection to the vulcanized parts, or for moving said elements (12) laterally and opposing such vulcanized parts, allowing to maintain the latter in place when separating the parts (4) and (5) forming the multiple mold during the demolding operation of said vulcanized parts.

3. A system for automatically removing parts in presses and the like according to the previous claims, **characterized in that** the carriage (15) has wheels (16) sliding in a guide (17) in which a rack (19) is provided which can be actuated by pinions (18) for the movement of the actual carriage (15), the latter having an engaging element (20) complementary to another element (21) provided in the frame of the assembly of the multiple mold (4-5) for the engagement and corresponding driving of the latter, from the position for obtaining the vulcanized parts to the position for releasing or demolding such parts.

4. A system for automatically removing parts in presses and the like according to the previous claims, **characterized in that** the assembly of the multiple mold (4-5) has wheels (7) sliding over lateral guides (8) for its movement from the machine (3), in which the parts are vulcanized, to the structure (1) in which said vulcanized parts are automatically removed or demolded.
